(19) Europäisches Patentamt
European Patent Office
Office européen des brevets

(11) Numéro de publication : **0 100 741**
**B1**

(12) **FASCICULE DE BREVET EUROPÉEN**

(45) Date de publication du fascicule du brevet : **21.11.85**

(51) Int. Cl.⁴ : **C 08 F 2/44**, C 08 F 14/06

(21) Numéro de dépôt : **83420098.2**

(22) Date de dépôt : **09.06.83**

(54) **Procédé de stabilisation de polymères à base de chlorure de vinyle.**

(30) Priorité : **01.07.82 FR 8211789**

(43) Date de publication de la demande : **15.02.84 Bulletin 84/07**

(45) Mention de la délivrance du brevet : **21.11.85 Bulletin 85/47**

(84) Etats contractants désignés : **AT BE CH DE FR GB IT LI LU NL SE**

(56) Documents cités :
**EP-A- 0 014 508**
**FR-A- 2 297 227**
**FR-A- 2 324 681**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Carette, Louis**
**64-66, rue de l'Egalité Résidence Rodin Apt.1 411**
**F-92130 Issy-les-Moulineaux (FR)**

(74) Mandataire : **Vignally, Noel et al**
**RHONE-POULENC RECHERCHES Service Brevets Chimie et Polymères Centre de recherches de Saint-Fons B.P. 62**
**F-69192 St-Fons Cédex (FR)**

**EP 0 100 741 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un nouveau procédé de stabilisation des polymères à base de chlorure de vinyle par des associations de dérivés métalliques et d'un ou plusieurs composés organiques.

Il a été proposé d'associer des sels de zinc ou de cadmium et/ou des sels de métaux alcalino-terreux, à de nombreux composés organiques tels que les β-cétoesters, les β-dicétones, les β-cétoaldéhydes, les polyols, les esters de l'acide thioglycolique et les dihydro-1,4 pyridines substituées.

Ainsi le brevet français n° 75 00765 (publié sous le numéro 2 297 227) décrit des compositions à base de chlorure de polyvinyle, stabilisées par un ou plusieurs sels organiques de métaux tels que le calcium, le baryum, le zinc, le plomb et le cadmium et un ou plusieurs composés β-dicétoniques. Le brevet français n° 1 435 882 préconise l'utilisation d'esters ou d'anhydrides dimères d'un acide cétoacétique en association avec des carboxylates et/ou des phénolates de métaux alcalins ou alcalino-terreux.

Il a également été proposé, notamment dans la demande de brevet français n° 77 30 992 (publiée sous le numéro 2 405 937) de stabiliser les polymères vinyliques à l'aide d'esters aliphatiques ou aromatiques des acides dihydro-1,4 pyridinecarboxyliques en association avec des sels de zinc et de métaux alcalinoterreux.

Le phényl-2 indole et ses dérivés sont connus pour leur action stabilisante sur le PVC, soit lorsqu'ils sont utilisés seuls, soit lorsqu'ils sont associés à des carboxylates de zinc et de calcium.

Ces diverses associations de stabilisants permettent d'obtenir, avec des degrés variables d'efficacité, une stabilisation des polymères à base de chlorure de vinyle.

Elles sont utilisées de manière classique lors de la formulation du polymère, c'est-à-dire qu'elles sont incorporées au polymère lui-même, généralement en même temps que d'autres adjuvants tels que les charges, les plastifiants, les agents anti UV, les antioxydants, les colorants et les lubrifiants.

Il a maintenant été trouvé et cela constitue un objet de la présente invention, que l'on peut préstabiliser les polymères à base de chlorure de vinyle en introduisant, avant ou pendant la polymérisation, un composé organique ou inorganique ou zinc et une β-dicétone ou un β-cétoaldéhyde.

Plus précisément l'invention consiste en un procédé de préstabilisation des polymères à base de chlorure de vinyle caractérisé par l'addition dans le monomère ou les comonomères, avant ou pendant la polymérisation conduisant auxdits polymères, de quantités efficaces d'au moins un composé organique ou inorganique du zinc et d'au moins une β-dicétone ou un β-cétoaldéhyde.

Par polymère à base de chlorure de vinyle, on entend :

— un homopolymère ou chlorure de vinyle, quel que soit son mode d'obtention ;

— un copolymère obtenu par copolymérisation du chlorure de vinyle avec un ou plusieurs autres monomères présentant une double liaison éthylénique polymérisable, comme par exemple les esters vinyliques (acétate de vinyle, chlorure de vinylidène), les acides (ou leurs esters) maléique et fumarique, les oléfines (éthylène, propylène, hexène), les esters acryliques ou méthacryliques, le styrène, les éthers vinyliques (n-vinyldodécyléther notamment).

Les copolymères contiennent habituellement au moins 50 % en poids de motifs chlorure de vinyle. De préférence ces copolymères contiennent au moins 80 % en poids de motifs chlorure de vinyle.

Le composé du zinc introduit avant ou pendant la polymérisation peut être :

— un composé inorganique ou zinc comme par exemple l'hydroxyde de zinc, le chlorure de zinc, le bromure de zinc, le fluorure de zinc, l'iodure de zinc, le carbonate de zinc, le nitrate de zinc, les différents phosphates de zinc, les silicates de zinc, le sulfate de zinc et le sulfite de zinc ;

— un composé organique du zinc comme par exemple :

les sels de zinc :

des acides aliphatiques monocarboxyliques ayant 1 à 30 atomes de carbone ou dicarboxyliques ayant 2 à 30 atomes de carbone, saturés ou non, substitués ou non, par exemple par un ou plusieurs atomes d'halogène ;

des monoesters, d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;

des acides monocarboxyliques aromatiques ou alicycliques substitués ou non, par exemple par un ou plusieurs radicaux alkyles ayant 1 à 6 atomes de carbone ou alkoxy ayant 1 à 6 atomes de carbone ou par un ou plusieurs atomes d'halogène ou par un ou 2 groupements OH ;

les phénolates de zinc dérivés de composés phénoliques substitués ou non tels que par exemple le phénol ou les phénols dont le cycle est substitué par un ou plusieurs groupements alkyles ayant de préférence de 4 à 24 atomes de carbone ;

les mercaptides de zinc tels que par exemple le zinciosulfuro-2 acétate d'isooctyle ;

les chélates de zinc de β-dicétones, notamment les chélates dérivant des β-dicétones qui seront définies ci-après.

Parmi les dérivés du zinc précédents on utilise le plus fréquemment, notamment pour des raisons pratiques ou pour des raisons économiques :

— comme composés inorganiques : le chlorure de zinc, le nitrate de zinc et le sulfate de zinc ;

— comme composés organiques :

les sels des acides mono ou dicarboxyliques ou des monoesters des acides dicarboxyliques indiqués précédemment,

les phénolates de zinc des divers composés phénoliques indiqués précédemment.

A titre d'exemples de ces composés organiques du zinc, on peut citer plus particulièrement les sels de zinc des acides propionique, octanoïque, laurique, stéarique, oléique, ricinoléique, benzoïque, paratertiobutylbenzoïque, salicylique, du maléate de mono(éthyl-2 hexyle) et les nonylphénates de zinc.

Le procédé de préstabilisation selon l'invention s'applique quel que soit le mode de polymérisation choisi : polymérisation en suspension, polymérisation en émulsion ou polymérisation en masse. Cependant pour des problèmes de dispersion efficace du composé du zinc en cours de la polymérisation, il est préférable lorsque cette dernière est effectuée en masse d'utiliser un composé organique du zinc plutôt qu'un composé inorganique.

Le composé du zinc utilisé dans le procédé selon l'invention sera introduit soit séparément, soit sous forme de solution ou de suspension dans l'un des réactifs mis en œuvre dans le procédé de polymérisation.

La quantité de composé du zinc efficace dans le procédé de préstabilisation selon l'invention peut varier dans de larges limites.

Ainsi des quantités aussi faibles que 0,000 5 % en poids de composé du zinc, par rapport au monomère ou aux comonomères mis en œuvre dans la polymérisation, sont efficaces.

En général il n'est pas utile d'introduire plus de 0,05 % en poids de composé du zinc en raison des dangers potentiels que présente la présence de quantités relativement importantes de zinc. De préférence la quantité de composé du zinc introduite représente de 0,001 % à 0,01 % en poids par rapport au monomère ou aux comonomères mis en œuvre.

Les β-dicétones et β-cétoaldéhydes qui sont utilisés dans le procédé de préstabilisation selon l'invention sont des composés maintenant bien connus de l'homme du métier. Dans ce qui suit ces divers composés seront appelés β-dicétones pour plus de concision de la description. Ils ont été notamment décrits comme stabilisants des polymères à base de chlorure de vinyle dans le brevet français n° 75 00765 (publié sous le numéro 2 297 227) et dans les certificats d'addition et demande de certificat d'addition n° 75 29466 (numéro de publication 2 324 681), n° 76 14863 (numéro de publication 2 351 149), n° 76 15869 (numéro de publication 2 352 025), n° 77 08318 (numéro de publication 2 383 988) et 79 12527 rattachés à ce brevet.

Ce sont plus précisément des composés de formule générale (I) :

$$R_1 - CO - \underset{\displaystyle R_2}{\underset{|}{CH}} - CO - R_3 \qquad (I)$$

dans laquelle :

— $R_1$ et $R_3$, identiques ou différents, représentent :

un groupement alkyle, linéaire ou ramifié, ayant 1 à 36 atomes de carbone, éventuellement substitué par un ou des atomes d'halogène,

un groupement alkényle, linéaire ou ramifié, ayant 3 à 36 atomes de carbone, éventuellement substitué par un ou des atomes d'halogène,

un radical aryle ou un radical aryle portant sur le cycle aromatique un ou plusieurs substituants tels que :

les radicaux alkyles ayant 1 à 6 atomes de carbone, éventuellement substitués par un ou des atomes d'halogène,

les radicaux alkényles ayant 2 à 6 atomes de carbone, éventuellement substitués par un ou des atomes d'halogène,

le groupement nitro,

le groupement —CHO,

le groupement —COOH,

les groupements alkoxy ayant 1 à 6 atomes de carbone,

les groupements $—COOR_4$, $R_4$ étant un radical alkyle ayant 1 à 12 atomes de carbone ou alkényle ayant 2 à 12 atomes de carbone,

le groupement OH,

les atomes d'halogènes,

un radical aralkyle dont la partie aliphatique comporte de 1 à 12 atomes de carbone et dont la partie cyclique peut comporter un ou plusieurs des substituants indiqués précédemment,

un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

un enchaînement de plusieurs des radicaux indiqués précédemment, les différents radicaux aliphatiques précédemment définis pouvant comporter un ou plusieurs atomes d'oxygène —O— ou de soufre —S— ou groupements carbonyles —CO— ou carboxylates —COO— ;

— l'un des radicaux $R_1$ ou $R_3$ peut représenter un atome d'hydrogène,

— $R_2$ représente :

un atome d'hydrogène ;

un radical alkyle ou alkényle ayant jusqu'à 36 atomes de carbone et pouvant comporter un ou des enchaînements —O—, —S—, —CO— ou —COO— ;

un radical —CO—$R_3$, $R_3$ étant un radical alkyle ayant de 1 à 36 atomes de carbone ou un radical aryle éventuellement porteur d'un ou plusieurs substituants indiqués précédemment ;

un radical

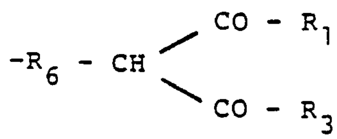

$R_6$ étant un radical alkylène de 1 à 6 atomes de carbone ou un atome d'hydrogène,

$R_1$ et $R_3$ ayant les significations indiquées précédemment,

un radical carbamoyle N-substitué de formule :

$$—OC—NH—R_7$$

dans laquelle $R_7$ est un radical aryle éventuellement porteur d'un ou plusieurs des substituants indiqués précédemment,

un radical de formule :

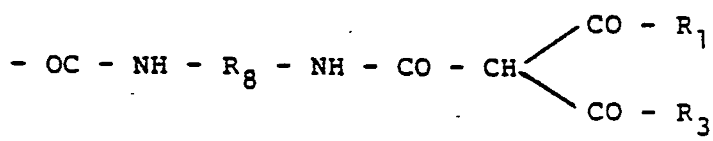

dans laquelle :

$R_1$ et $R_3$ ont les significations indiquées précédemment

$R_8$ représente :

— un radical arylène éventuellement porteur d'un ou plusieurs des substituants indiqués précédemment,

— un radical diphénylène méthane dont un cycle ou les 2 cycles sont éventuellement porteurs d'un ou plusieurs des substituants indiqués précédemment,

un radical de formule :

$$—COO—R_9$$

dans laquelle $R_9$ est un radical alkyle substitué ou non ayant de 1 à 36 atomes de carbone,

un radical de formule :

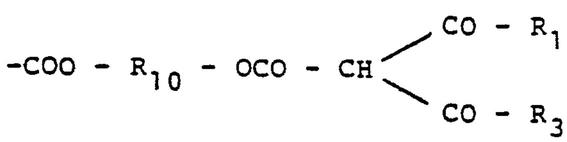

dans laquelle $R_1$ et $R_3$ ont les significations indiquées précédemment et $R_{10}$ représente un radical alkylène, linéaire ou ramifié substitué ou non par un ou des atomes d'halogène, ayant 1 à 20 atomes de carbone ;

— les symboles $R_1$ et $R_3$ peuvent représenter ensemble un radical divalent ayant 2 à 5 atomes de carbone et pouvant comporter un atome d'oxygène, de soufre ou d'azote ;

— les symboles $R_1$ et $R_2$ peuvent représenter ensemble un radical divalent tel que :

un radical alkylène ou alkénylène linéaire ou ramifié ayant de 3 à 36 atomes de carbone,

un radical aralkylène ayant de 7 à 36 atomes de carbone,

un radical arylène ou cycloaliphatique divalent ayant moins de 14 atomes de carbone, les radicaux cycloaliphatiques pouvant compter une ou plusieurs doubles liaisons carbone-carbone,

ces radicaux divalents peuvent être substitués par un ou plusieurs atomes d'halogène et les cycles aromatiques et cycloaliphatiques peuvent porter un ou plusieurs des substituants indiqués précédemment,

les parties aliphatiques des radicaux divalents précédents peuvent comporter un ou plusieurs atomes d'oxygène —O— ou de soufre —S— ou groupements —CO— ou —COO—,

— les divers radicaux représentés par $R_1$ et $R_3$ sont tels que les 2 atomes de carbone directement liés aux groupements carbonyles de la formule (I) ne comportent pas de double liaison.

A titre d'exemples de composés de formule (I) utilisables dans le procédé selon l'invention on peut citer : l'heptanedione-2,4 ; la décanedione-2,4 ; la méthyl-2 décène-2-dione-6,8 ; la méthyl-2 nonène-2 dione-6,8 ; la stéaroylacétone ; la stéaroyl-1-octanone-2 ; le triacétylméthane ; le dioxo-7,9 décanoate d'éthyle ; la benzoylacétone ; la benzoyl-1 octanone-2 ; la diphényl-1,4 butanedione-1,3 ; la stéaroylacétophénone ; la palmitoylacétophénone ; la benzoyl-1 méthyl-4 pentanone-2 ; le benzoyl-octacosanoylméthane ; le bis(dioxo-2,4 butyl)-1,4 benzène ; le paraméthoxybenzoyl-stéaroyl-méthane ; l'allyl-2 phényl-1 butanedione-1,3 ; le méthyl-2 acétyl acétaldéhyde ; le benzoylacétaldéhyde ; l'acétoacétyl cyclohexène-3 ; le bis(dioxo-2,6 cyclohexyl) méthane ; l'acétyl-2 oxo-1 tétrahydro-1,2,3,4 naphtalène ; le palmitoyl-2 oxo-1 tétrahydro-1,2,3,4 naphtalène ; l'oxo-1 stéaroyl-2 tétrahydro-1,2,3,4 naphtalène ; l'acétyl-2 cyclohexanone-1 ; la benzoyl-2 cyclohexanone-1 ; l'acétyl-2 cyclohexanedione-1,3 ; le dibenzoylméthane ; le tribenzoylméthane ; le bis(paraméthoxybenzoyl) méthane ; la (N-phénylcarbamoyl)-1 benzoyl-1 acétone ; la (N-phénylcarbamoyl)-1 acétyl-1 acétone.

Ces diverses β-dicétones de formule (I) sont préparées habituellement par des procédés connus, tels que ceux décrits dans « ORGANIC REACTIONS » par R. Adams and Al. (Edition 1954, volume VIII pages 59 et suivantes). Certaines synthèses plus spécifiques sont décrites dans « REC. TRAV. CHIM. PAYS-BAS » (1897) volume 16, pages 116 et suivantes par M.J. Kramers, dans « J. CHEM. SOC. » (1925) volume 127, pages 2891 et suivantes par G.T. Morgan et Al. ou dans « J. CHEM. SOC. » (1941) pages 1582 et suivantes par R. Robinson et E. Seijo.

La quantité de β-dicétone efficace dans le procédé selon l'invention peut varier très largement.

Généralement on utilise au moins 0,001 % en poids de β-dicétone par rapport au monomère ou aux comonomères mis en œuvre.

En pratique il n'est guère nécessaire d'introduire plus de 1 % en poids de β-dicétone par rapport au monomère ou aux comonomères mis en œuvre.

De préférence la quantité de β-dicétone introduite varie de 0,01 à 0,5 % en poids par rapport au monomère ou aux comonomères mis en œuvre.

Les β-dicétones peuvent être introduites soit séparément, soit en mélange avec le composé du zinc, soit encore en solution ou suspension dans l'un des réactifs mis en œuvre dans la polymérisation.

Les β-dicétones et les composés de zinc peuvent être introduits pendant la polymérisation. Il est cependant généralement plus judicieux de les ajouter le plus tôt possible. Normalement ils sont présents dès le début de la polymérisation.

La polymérisation du chlorure de vinyle seul ou en mélange avec un ou plusieurs comonomères tels que, par exemple, l'acétate de vinyle ou le chlorure de vinylidène peut être effectuée en suspension dans l'eau. Généralement le rapport pondéral monomère(s) + polymère/eau est supérieur à 0,2 et se situe de préférence entre 0,4 et 0,8. La suspension est stabilisée par addition d'alcool polyvinylique représentant habituellement de 0,000 1 à 5 % en poids et de préférence de 0,001 à 0,2 % en poids par rapport au poids total de la suspension.

L'alcool polyvinylique utilisé a généralement un degré d'hydrolyse de 40 à 100 % et une masse moléculaire telle qu'une solution à 4 % dans l'eau présente à 20 °C une viscosité comprise entre 1 et 100 centipoises. En outre d'autres stabilisants de suspension peuvent être utilisés, tels que par exemple la méthylcellulose ou des sulfonates d'alkylaryle.

La polymérisation en suspension est effectuée en présence d'un initiateur de polymérisation tel que l'azo-bis-isobutyronitrile, les percarbonates, le peroxyde de dibenzoyle, le peroxyde de dicaproyle, le peroxyde de dilauroyle, le peroxyde de ditertiobutyle, ou des mélanges de ces peroxydes.

Ces peroxydes sont présents en quantités variant de 0,000 5 à 2 % en poids et de préférence de 0,01 à 0,3 % en poids par rapport au monomère ou aux comonomères.

Le pH est maintenu de préférence entre 4 et 8.

Il est souvent utile d'introduire également à la polymérisation un composé époxydé.

Ces époxydes sont généralement des composés complexes, habituellement des polyglycérides époxydés comme l'huile de soja époxydée, les huiles de lin ou de poisson époxydées, la talloil époxyde ou des esters époxydés d'acides gras, ou des hydrocarbures époxydés comme le polybutadiène époxydé ou des éthers époxydés.

La suspension peut également contenir d'autres composés tels que des agents de transfert de chaîne comme le docécylmercaptan ou le thioéthanol en quantités allant jusqu'à 5 % en poids par rapport au monomère ou aux comonomères.

La polymérisation est généralement réalisée à des températures situées entre 45 °C et 80 °C. La pression dans le réacteur de polymérisation peut varier entre 5 et 20 bars.

La polymérisation du chlorure de vinyle et des éventuels comonomères peut également être effectuée en masse. Le procédé de polymérisation en masse peut en particulier être celui qui est décrit dans le brevet français n° 1 357 736 ainsi que dans les certificats d'addition n° 83 377, 83 383 et 83 714. On peut également utiliser les techniques perfectionnées décrites dans les brevets français n° 1 493 610, 1 522 403 et 1 522 409.

Un autre objet de l'invention consiste dans les polymères ou copolymères à base de chlorure de vinyle préstabilisés par le procédé précédemment décrit.

Ces polymères peuvent être utilisés dans certaines applications ne requérant pas une excellente résistance au jaunissement causé par la chaleur ; selon les applications envisagées ces polymères sont formulés de manière connue en soi avec des plastifiants ou des modificateurs de résistance au choc, des pigments et/ou des charges, des lubrifiants, des stabilisants lumière, des antioxydants et divers autres adjuvants tels que certains stabilisants thermiques auxiliaires bien connus de l'homme de métier, comme par exemple les époxydes précédemment indiqués (qui peuvent être introduits à la polymérisation et/ou dans le polymère lui-même), les phosphites organiques et les composés phénoliques.

De nombreux phosphites organiques, notamment d'alkyle ou d'aryle, sont également connus pour leur activité stabilisante, comme par exemple le phosphite de trisnonylphényle, le phosphite de bis(ditertiobutyl-2,4 phényle) et de nonylphényle, le phosphite de bis(cyclohexyl-2 phényle) et de triodécyle, le phosphite de tris(tertiobutyl-2 méthyl-4 phényle), le phosphite de ditertioamyl-2,4 phényle et de diisodécyle, le phosphite de phényle et d'éthyl-2 hexyle et le phosphite de triisodécyle.

Certains composés phénoliques comme l'hydroxytoluène butylé et d'autres phénols substitués ont aussi une action stabilisante.

Certaines applications de polymères à base de chlorure de vinyle exigent une excellente résistance aux traitements thermiques et notamment une excellente résistance au jaunissement lors de la mise en forme de ces polymères à des températures qui sont fréquemment comprises entre 170° et 200 °C.

Il est alors nécessaire de faire suivre le traitement de préstabilisation selon le procédé de l'invention, par un traitement complémentaire de stabilisation thermique, effectué sur le polymère, donc après la polymérisation.

Cette stabilisation complémentaire peut être effectuée à l'aide de nombreux stabilisants ou systèmes stabilisants, maintenant bien connus de l'homme du métier tels que par exemple :

— les associations de β-dicétones ou β-cétoaldéhydes avec au moins un composé organique du zinc et au moins un composé organique d'un métal du groupe IIa de la classification périodique des éléments ;

— les associations carboxylate de cadmium et carboxylate de baryum ;

— les mercaptides d'organoétain, notamment les mélanges de mercaptides de diorganoétain et de monoorganoétain ;

— les maléates d'organoétain ;

— les composés du plomb ;

— les esters de l'acide aminocrotonique ;

— le phényl-2 indole et ses dérivés associés à au moins un composé organique du zinc et à au moins un composé organique d'un métal du groupe IIa de la classification périodique des éléments ;

— les dihydro-1,4 diméthyl-2,6 dialkoxycarbonyl-3,5 pyridines, éventuellement associées à au moins un composé organique du zinc et à au moins un composé organique d'un métal ou groupe IIa de la classification périodique des éléments ;

— les esters de l'acide thioglycolique associés à au moins un composé organique du zinc et à au moins un composé organique d'un métal du groupe IIa de la classification périodique des éléments.

Un autre objet de l'invention est donc constitué par un procédé de stabilisation de polymères à base de chlorure de vinyle caractérisé :

1) par une préstabilisation consistant dans l'addition dans le monomère ou les comonomères, avant ou pendant la polymérisation conduisant auxdits polymères, de quantités efficaces d'au moins un composé organique ou inorganique du zinc et d'au moins une β-dicétone ou un β-cétoaldéhyde,

2) par une stabilisation complémentaire, après la polymérisation par l'un des stabilisants ou systèmes stabilisants cités précédemment.

Un autre avantage apporté par la préstabilisation selon l'invention réside dans le fait que, lors de la stabilisation complémentaire à l'aide des stabilisants thermiques indiqués précédemment, il est possible d'obtenir une meilleure stabilisation thermique initiale avec une même quantité de stabilisants ou un même niveau de stabilisation thermique avec une quantité plus faible de stabilisants.

Parmi les stabilisants ou systèmes stabilisants utilisés pour la stabilisation effectuée après la polymérisation, il est tout particulièrement intéressant d'utiliser les associations constituées par les β-dicétones telles que définies pour le procédé de préstabilisation avec au moins un composé organique du zinc, tel que ceux qui peuvent être utilisés dans le procédé de préstabilisation et au moins un composé organique de calcium, baryum, magnésium et strontium.

Les composés organiques de calcium, baryum, magnésium et strontium sont notamment :

— les sels :

des acides aliphatiques monocarboxyliques ayant 1 à 30 atomes de carbone ou dicarboxyliques ayant 2 à 30 atomes de carbone, saturés ou non, substitués ou non, par exemple par un ou plusieurs atomes d'halogène ;

des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;

des acides monocarboxyliques aromatiques ou alicycliques, substitués ou non, par exemple par un ou plusieurs radicaux alkyles ayant 1 à 6 atomes de carbone ou alkoxy ayant 1 à 6 atomes de carbone, par un ou plusieurs atomes d'halogène, ou par un ou deux groupements —OH ;

— les phénolates métalliques dérivés de composés phénoliques substitués ou non, tels que par

exemple le phénol ou les phénols dont le cycle est substitué par un ou plusieurs groupements alkyles ayant de préférence 4 à 24 atomes de carbone ;

— les mercaptides tels que les mercaptides dérivés du thioglycolate d'isooctyle ;

— les chélates des composés β-dicarbonylés de formule (I).

Parmi ces composés du calcium, du baryum, du magnésium et du strontium, on utilise le plus fréquemment les dérivés métalliques des acides carboxyliques ou de leurs monoesters et les phénolates métalliques indiqués précédemment.

Comme métaux on utilise plus particulièrement le baryum et le calcium ou leurs mélanges ainsi que les mélanges calcium-magnésium.

En général on utilise de 0,005 à 5 % en poids de β-dicétone de formule (I) par rapport au polymère à base de chlorure de vinyle à stabiliser. L'homme du métier déterminera la quantité la plus appropriée au degré de stabilisation thermique souhaité et cela en tenant compte de la quantité de β-dicétone mise en œuvre dans la préstabilisation.

La quantité de composé organique du zinc utilisée est généralement de 0,005 à 2 % en poids par rapport au polymère à stabiliser. L'homme du métier aura également à tenir compte de la quantité de composé du zinc introduite lors de la préstabilisation, lorsqu'il déterminera la quantité de composé organique du zinc à utiliser pour obtenir le degré de stabilisation désiré.

La quantité de composé organique de calcium, baryum, magnésium ou strontium utilisée est généralement de 0,01 à 5 % en poids par rapport au polymère à stabiliser.

Lorsque la stabilisation complémentaire est effectuée à l'aide d'associations carboxylate de cadmium-carboxylate de baryum on utilise généralement de 0,005 % à 2 % en poids de carboxylate de cadmium et de 0,01 à 5 % en poids de carboxylate de baryum par rapport au polymère à stabiliser.

Lorsque la stabilisation complémentaire est faite par addition de mercaptides d'organoétains, ceux-ci sont le plus souvent dérivés ou thioglycolate d'isooctyle ; les mercaptides d'organoétain utilisés sont généralement des mercaptides de dialkylétain, de monoalkylétain ou leurs mélanges.

Les mercaptides d'organoétains ainsi que les maléates d'organoétain, qui peuvent également servir pour la stabilisation complémentaire des polymères, sont généralement utilisés à raison de 0,01 à 5 % en poids par rapport aux polymères.

Les composés du plomb, qui sont parmi les premiers stabilisants qui ont été utilisés pour les polymères à base de chlorure de vinyle, sont de préférence des sels basiques de plomb tels que le carbonate basique, le sulfate tribasique et le phosphite dibasique de plomb ainsi que les sels de plomb d'acides carboxyliques aliphatiques ou aromatiques ; notamment les sels d'acides aliphatiques monocarboxyliques ayant 1 à 30 atomes de carbone ou dicarboxyliques ayant 2 à 30 atomes de carbone, saturés ou non, substitués ou non, par exemple par un ou plusieurs atomes d'halogène. Les quantités habituellement employées sont de 0,01 à 15 % en poids par rapport aux polymères.

Comme cela a été indiqué précédemment de nombreux autres stabilisants peuvent être utilisés pour la stabilisation complémentaire des polymères à base de chlorure de vinyle. Ce sont des composés organiques qui agissent, soit seuls, soit en association avec des couples de composés du zinc et d'un métal du groupe IIa de la classification périodique tels que ceux qui ont été précédemment décrits. Les esters de l'acide aminocrotonique, le phényl-2 indole et ses dérivés, les dihydro-1,4 diméthyl-2,6 dialkoxycarbonyl-3,5 pyridines et les esters de l'acide thioglycolique ont été notamment cités.

Les esters de l'acide aminocrotonique sont généralement des aminocrotonates d'alkyle à longue chaîne ou des aminocrotonates de thioalkylèneglycols.

Le phényl-2 indole est un composé bien connu qui peut être également remplacé par ses dérivés, notamment ceux qui sont décrits dans les demandes de brevets français n° 74/19 304 (publiée sous le n° 2 273 841), 74/21 042 (publiée sous le n° 2 275 461) et la demande de certificat d'addition français n° 75/17 106 (publiée sous le n° 2 313 422).

Les dérivés de la dihydropyridine ont été notamment décrits dans le brevet français n° 73/28 524 (publié sous le n° 2 239 496) et dans les demandes de brevets français n° 77/30 991 (publiée sous le n° 2 405 974) et n° 77/30 992 (publiée sous le n° 2 405 937).

Les esters de l'acide thioglycolique ont été décrits dans la demande de brevet français n° 79/17 265.

Ces différents stabilisants organiques sont généralement efficaces à des taux variant de 0,01 à 5 % en poids par rapport aux polymères à stabiliser et de préférence compris entre 0,05 et 2 % en poids. Lorsqu'ils sont présents en association avec ces stabilisants organiques, les composés organiques du zinc et des métaux du groupe IIa de la classification périodique des éléments, le sont aux taux qui ont été indiqués précédemment.

De manière habituelle l'incorporation des différents stabilisants, mis en œuvre au cours de la stabilisation complémentaire après la polymérisation, est faite sur le polymère à l'état de poudre. Elle peut être effectuée en même temps que celle des divers autres adjuvants. Toutes les méthodes usuelles connues dans ce domaine peuvent convenir pour réaliser le mélange des différents ingrédients. Toutefois l'homogénéisation de la composition finale peut avantageusement être faite sur malaxeur ou sur mélangeur à rouleaux à une température telle que la composition devienne fluide, normalement entre 150° et 200 °C pour le PVC, et pendant une durée suffisante, soit environ 3 à 20 minutes.

Les compositions de polymère à base de chlorure de vinyle préstabilisé par le procédé selon l'invention (ledit polymère préstabilisé ayant éventuellement reçu une stabilisation complémentaire après

la polymérisation) peuvent être mises en œuvre selon toutes les techniques utilisées habituellement pour travailler les compositions de PVC, comme par exemple l'injection ; l'extrusion ; l'extrusion-soufflage ; le calandrage ; le moulage par rotation.

Dans les exemples qui suivent le polymère préstabilisé est ensuite formulé et mis sous forme de plaques afin que l'on puisse par des tests de vieillissement thermique déterminer les avantages apportés par le procédé de préstabilisation.

Exemples

Essais de polymérisation

A) Polymérisation témoin référence A.

Dans un autoclave de 25 litres on introduit :

10 kg d'eau
16,7 g de stabilisant époxydé (huile de soja époxydée)
7,3 g d'alcool polyvinylique
0,67 g de peroxyde de dilauroyle.

On fait le vide, puis on casse le vide avec de l'azote afin d'éliminer l'oxygène de l'air. On introduit 6,7 kg de chlorure de vinyle monomère. La température est portée à 60 °C. On maintient cette température à 60 °C pendant 7 heures, puis on dégaze. Le polymère est filtré et séché.

B) Polymérisation en présence de stéaroylbenzolméthane. Polymère référence B

Dans un autoclave on introduit les mêmes additifs que précédemment, c'est-à-dire :

10 kg d'eau
16,7 g d'huile de soja époxydée
7,3 g d'alcool polyvinylique
0,67 g de peroxyde de dilauroyle,

et on ajoute :

2 g de stéaroylbenzoylméthane

La suite de l'opération est identique à la précédente : on fait le vide qui est ensuite cassé à l'azote. On introduit 6,7 kg de chlorure de vinyle monomère. On porte à 60 °C et maintient cette température pendant 7 heures au bout desquelles on dégaze, filtre et sèche le polymère.

C) Polymérisation en présence de stéaroylbenzoylméthane et de sel de zinc. Polymère référence C

Dans un autoclave on introduit comme pour le polymère A :

10 kg d'eau
16,7 g d'huile de soja époxydée
7,3 g d'alcool polyvinylique
0,67 g de peroxyde de dilauroyle ;

on ajoute :

2 g de stéaroylbenzoylméthane
0,153 g de chlorure de zinc.

Après avoir fait le vide, puis cassé le vide à l'azote, on introduit 6,7 kg de chlorure de vinyle monomère. La température est portée à 60 °C et maintenue pendant 7 heures au bout desquelles on dégaze, filtre, et sèche le polymère.

Le polymère C est préparé selon le procédé de l'invention.

Essais de stabilité

Avec les polymères décrits ci-dessus, on prépare des formulations prêtes à être transformées : les formules sont du type de celles couramment employées pour la fabrication de bouteilles.

Les formules de base étant les suivantes :

| | |
|---|---|
| PVC (A, B ou C) | 100 g |
| Stéarate de calcium | 0,3 g |
| Octanoate de zinc | 0,08 g |
| Huile de soja époxydée | 2 g |

A ces formules, on ajoute des quantités de stéaroylbenzoylméthane indiquées dans le tableau I ci-après.

(Siehe Tabelle I Seite 10 f.)

Tableau I

Les essais 3, 6 et 9 sont effectués selon le procédé de l'invention.

| ESSAI | POLYMERE | STEAROYLBENZOYLMETHANE AJOUTE A LA POLYMERISATION (en g) | CHLORURE DE ZINC AJOUTE A LA POLYMERISATION (en g) | STEAROYLBENZOYLMETHANE AJOUTE A LA FORMULATION (en g) | STEAROYLBENZOYLMETHANE TOTAL (en g) |
|---|---|---|---|---|---|
| 1 | A | 0 | 0 | 0 | 0 |
| 2 | B | 0,03 | 0 | 0 | 0,03 |
| 3 | C | 0,03 | 0,0025 | 0 | 0,03 |
| 4 | A | 0 | 0 | 0,25 | 0,25 |
| 5 | B | 0,03 | 0 | 0,25 | 0,28 |
| 6 | C | 0,03 | 0,0025 | 0,25 | 0,28 |
| 7 | A | 0 | 0 | 0,22 | 0,22 |
| 8 | B | 0,03 | 0 | 0,22 | 0,25 |
| 9 | C | 0,03 | 0,0025 | 0,22 | 0,25 |

Les mélanges sont effectués en mélangeur rapide (de type HEUSCHEL) à 1 500 tours/min en laissant la température s'élever jusqu'à 120 °C environ.

Les poudres obtenues sont malaxées sur malaxeur à cylindres (du type LESOUYER)

diamètre des cylindres : 20 cm
Rapport de friction : 1,15
Température : 170 °C
Durée du malaxage : 6 minutes.

Les feuilles ainsi préparées sont soumises à un traitement thermique en four ventilé à 180 °C.

On suit l'évolution d'aspect des échantillons au cours du temps en notant à l'aide d'un spectrophotocolorimètre le % de réflexion en lumière bleue-verte ; on utilise pour la notation le paramètre Y du système trichromatique de la Commission Internationale de l'Eclairage (CIE).

On constate en outre que l'aspect initial est conservé pendant un certain temps (Ti) qui est repéré.

Les résultats sont rassemblés dans le tableau II suivant.

Les valeurs de Y les plus élevées correspondent aux produits les moins colorés donc les moins dégradés. Les valeurs de Y les plus basses correspondent aux produits les plus dégradés (les moins stables).

Tableau II

| ESSAIS | VALEUR DE Y % AU TEMPS 0 | Ti (min) | VALEUR DE Y % APRES 15 mn à 180° | VALEUR DE Y % APRES 30 mn à 180° |
|---|---|---|---|---|
| 1 | 65 | 15 | 64 | 32 |
| 2 | 62 | 15 | 60 | 38 |
| 3 | 76 | 22 | 75 | 45 |
| 4 | 82 | 20 | 80 | 36 |
| 5 | 85 | 20 | 80 | 37 |
| 6 | 88 | 25 | 87 | 59 |
| 7 | 80 | 20 | 81 | 40 |
| 8 | 81 | 20 | 79 | 38 |
| 9 | 90 | 25 | 85 | 56 |

On voit dans les essais 1 et 2 que l'apport de 0,03 % de stéaroylbenzoylméthane ne modifie pas de façon significative le comportement du mélange. Par contre la formulation n° 3 a un aspect nettement amélioré ; et son aspect initial est plus durable (22 minutes au lieu de 15). Les essais n° 4 et 5 ont des stabilités voisines montrant que les PVC A et B se différencient peu, mais sont meilleurs que les essais 1 et 2 car il est connu que l'apport de stéaroylbenzoylméthane dans les formulations améliore leur stabilité thermique. L'essai n° 6 montre l'intérêt du polymère C, l'ensemble des résultats étant supérieur à ceux des autres formules.

**Revendications**

1. Procédé de préstabilisation de polymères à base de chlorure de vinyle caractérisé par l'addition dans le monomère ou les comonomères, avant ou pendant la polymérisation conduisant auxdits polymères, de quantités efficaces d'au moins un composé organique ou inorganique du zinc et d'au moins une β-dicétone ou un β-cétoaldéhyde.

2. Procédé selon la revendication 1, caractérisé en ce que :

A. Le composé du zinc est choisi parmi :

— les composés inorganiques du zinc tels que l'hydroxyde de zinc, le chlorure de zinc, le bromure de zinc, le fluorure de zinc, l'iodure de zinc, le carbonate de zinc, le nitrate de zinc, les phosphates de zinc, les silicates de zinc, le sulfate de zinc et le sulfite de zinc ;

— les composés organiques du zinc tels que :

les sels de zinc :

des acides aliphatiques monocarboxyliques ayant 1 à 30 atomes de carbone ou dicarboxyliques ayant 2 à 30 atomes de carbone, saturés ou non, substitués ou non, par exemple par un ou plusieurs atomes d'halogène ;

des monoesters, d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;

des acides monocarboxyliques aromatiques ou alicycliques substitués ou non, par exemple par un ou plusieurs radicaux alkyles ayant 1 à 6 atomes de carbone ou alkoxy ayant 1 à 6 atomes de carbone ou par un ou plusieurs atomes d'halogène ou par un ou 2 groupements OH ;

les phénolates de zinc dérivés de composés phénoliques substitués ou non tels que par exemple le phénol ou les phénols dont le cycle est substitué par un ou plusieurs groupements alkyles ayant de préférence de 4 à 24 atomes de carbone ;

les mercaptides de zinc tels que par exemple le zinciosulfuro-2 acétate d'isooctyle ;

les chélates de zinc de β-dicétones ;

B. La β-dicétone ou le β-cétoaldéhyde sont choisis parmi les composés de formule générale (I) :

$$R_1 - CO - \underset{\displaystyle R_2}{\underset{|}{CH}} - CO - R_3 \qquad \text{(I)}$$

dans laquelle :

— $R_1$ et $R_3$, identiques ou différents, représentent :

un groupement alkyle, linéaire ou ramifié, ayant 1 à 36 atomes de carbone, éventuellement substitué par un ou des atomes d'halogène ;

un groupement alkényle, linéaire ou ramifié, ayant 3 à 36 atomes de carbone, éventuellement substitué par un ou des atomes d'halogène ;

un radical aryle ou un radical aryle portant sur le cycle aromatique un ou plusieurs substituants tels que :

les radicaux alkyles ayant 1 à 6 atomes de carbone, éventuellement substitués par un ou des atomes d'halogène,

les radicaux alkényles ayant de 2 à 6 atomes de carbone, éventuellement substitués par un ou des atomes d'halogène,

le groupement nitro,

le groupement —CHO,

le groupement —COOH,

les groupements alkoxy ayant 1 à 6 atomes de carbone,

les groupements —$COOR_4$, $R_4$ étant un radical alkyle ayant 1 à 12 atomes de carbone ou alkényle ayant 2 à 12 atomes de carbone,

le groupement OH,

les atomes d'halogènes ;

un radical aralkyle dont la partie alyphatique comporte de 1 à 12 atomes de carbone et dont la partie cyclique peut comporter un ou plusieurs des substituants indiqués précédemment ;

un radical cycloaliphatique comportant de 5 à 12 atomes de carbone et dont la partie cyclique peut comporter une ou plusieurs doubles liaisons carbone-carbone et porter un ou plusieurs des substituants indiqués précédemment ;

un enchaînement de plusieurs des radicaux indiqués précédemment,

les différents radicaux aliphatiques précédemment définis pouvant comporter un ou plusieurs atomes d'oxygène —O— ou de soufre —S— ou groupements carbonyles —CO— ou carboxylates —COO— ;

— l'un des radicaux $R_1$ ou $R_3$ peut représenter un atome d'hydrogène ;

— $R_2$ représente :

un atome d'hydrogène ;

un radical alkyle ou alkényle ayant jusqu'à 36 atomes de carbone et pouvant comporter un ou des enchaînements —O—, —S—, —CO— ou —COO— ;

un radical —CO—$R_3$, $R_3$ étant un radical alkyle ayant de 1 à 36 atomes de carbone ou un radical aryle éventuellement porteur d'un ou plusieurs substituants indiqués précédemment ;

un radical $$-R_6 - CH\begin{matrix} \diagup CO - R_1 \\ \diagdown CO - R_3 \end{matrix}$$

$R_6$ étant un radical alkylène de 1 à 6 atomes de carbone ou un atome d'hydrogène,

$R_1$ et $R_3$ ayant les significations indiquées précédemment.

un radical carbamoyle N-substitué de formule :

$$—OC—NH—R_7$$

dans laquelle $R_7$ est un radical aryle éventuellement porteur d'un ou plusieurs des substituants indiqués précédemment ;

un radical de formule :

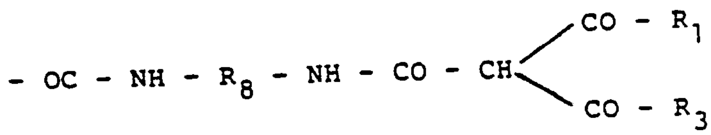

dans laquelle :

$R_1$ et $R_3$ ont les significations indiquées précédemment

$R_8$ représente :

— un radical arylène éventuellement porteur d'un ou plusieurs des substituants indiqués précédemment,

— un radical diphénylène méthane dont un cycle ou les 2 cycles sont éventuellement porteurs d'un ou plusieurs des substituants indiqués précédemment ;

un radical de formule :

$$—COO—R_9$$

dans laquelle $R_9$ est un radical alkyle substitué ou non ayant de 1 à 36 atomes de carbone ;

un radical de formule :

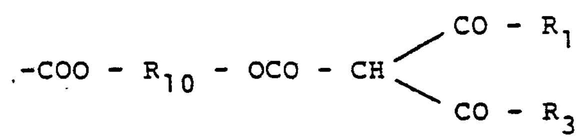

dans laquelle $R_1$ et $R_3$ ont les significations indiquées précédemment et $R_{10}$ représente un radical alkylène, linéaire ou ramifié substitué ou non par un ou des atomes d'halogène, ayant 1 à 20 atomes de carbone ;

— les symboles $R_1$ et $R_3$ peuvent représenter ensemble un radical divalent ayant 2 à 5 atomes de carbone et pouvant comporter un atome d'oxygène, de soufre ou d'azote ;

— les symboles $R_1$ et $R_2$ peuvent représenter ensemble un radical divalent tel que :

un radical alkylène ou alkénylène linéaire ou ramifié ayant de 3 à 36 atomes de carbone ;

un radical aralkylène ayant de 7 à 36 atomes de carbone ;

un radical arylène ou cycloaliphatique divalent ayant moins de 14 atomes de carbone, les radicaux cycloaliphatiques pouvant compter une ou plusieurs doubles liaisons carbone-carbone ;

ces radicaux divalents peuvent être substitués par un ou plusieurs atomes d'halogène et les cycles aromatiques et cycloaliphatiques peuvent porter un ou plusieurs des substituants indiqués précédemment ;

les parties aliphatiques des radicaux divalents précédents peuvent comporter un ou plusieurs atomes d'oxygène —O— ou de soufre —S— ou groupements —CO— ou —COO— ;

— les divers radicaux représentés par $R_1$ et $R_3$ sont tels que les 2 atomes de carbone directement liés aux groupements carbonyles de la formule (I) ne comportent pas de double liaison.

3. Procédé selon l'une des revendications 1 et 2, caractérisé en ce que l'on utilise :

— de 0,000 5 à 0,05 % en poids de composé du zinc,

— et de 0,001 à 1 % en poids de β-dicétone ou β-cétoaldéhyde,

par rapport au monomère ou au comonomères mis en œuvre dans la polymérisation.

4. Procédé selon l'une quelconque des revendications 1 à 3, caractérisé en ce que l'on utilise :

— de 0,001 à 0,01 % en poids de composé du zinc,

— et de 0,01 à 0,5 % en poids de β-dicétone ou β-cétoaldéhyde,

par rapport au monomère ou au comonomères mis en œuvre dans la polymérisation.

5. Procédé selon l'une quelconque des revendications 1 à 4, caractérisé en ce qu'il s'applique à des polymères à base de chlorure de vinyle préparés en suspension ou en émulsion.

6. Procédé selon l'une quelconque des revendications 1 à 4, caractérisé en ce que l'on utilise un dérivé organique du zinc lorsque ledit procédé s'applique à des polymères à base de chlorure de vinyle préparés en masse.

7. Polymères à base de chlorure de vinyle préstabilisés par le procédé selon l'une quelconque des revendications 1 à 6.

8. Procédé de stabilisation de polymères à base de chlorure de vinyle caractérisé en ce qu'il comprend :

A) une préstabilisation selon l'une des revendications 1 à 6 ;

B) une stabilisation complémentaire, après la polymérisation, à l'aide de stabilisants ou systèmes stabilisants choisis parmi :

— les associations de β-dicétones ou β-cétoaldéhydes avec au moins un composé organique du zinc et au moins un composé organique d'un métal du groupe IIa de la classification périodique des éléments ;

— les associations carboxylate de cadmium et carboxylate de baryum ;

— les mercaptides d'organoétain, notamment les mélanges de mercaptides de diorganoétain et de monoorganoétain ;

— les maléates d'organoétain ;

— les composés du plomb ;

— les esters de l'acide aminocrotonique ;

— le phényl-2 indole et ses dérivés associés à au moins un composé organique du zinc et à au moins un composé organique d'un métal du groupe IIa de la classification périodique des éléments ;

— les dihydro-1,4 diméthyl-2,6 dialkoxycarbonyl-3,5 pyridines, éventuellement associées à au moins un composé organique du zinc et à au moins un composé organique d'un métal du groupe IIa de la classification périodique des éléments ;

— les esters de l'acide thioglycolique associés à au moins un composé organique du zinc et à au moins un composé organique d'un métal du groupe IIa de la classification périodique des éléments.

9. Procédé selon la revendication 8, caractérisé en ce que la stabilisation complémentaire, après la polymérisation, est effectuée à l'aide d'associations :

— d'au moins une β-dicétone ou un β-cétoaldéhyde de formule générale (I), tels que définis dans la revendication 2) ;

— d'au moins un composé organique du zinc tel que ceux indiqués dans la revendication 2 ;

— et d'au moins un composé organique de calcium, baryum, magnésium ou strontium tel que :

les sels :

des acides aliphatiques monocarboxyliques ayant 1 à 30 atomes de carbone ou dicarboxyliques ayant 2 à 30 atomes de carbone, saturés ou non, substitués ou non, par exemple par un ou plusieurs atomes d'halogène ;

des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;

des acides monocarboxyliques aromatiques ou alicycliques, substitués ou non, par exemple par un ou plusieurs radicaux alkyles ayant 1 à 6 atomes de carbone ou alkoxy ayant 1 à 6 atomes de carbone, par un ou plusieurs atomes d'halogène, ou par un ou deux groupements —OH ;

les phénolates métalliques dérivés de composés phénoliques substitués ou non, tels que par exemple le phénol ou les phénols dont le cycle est substitué par un ou plusieurs groupements alkyles ayant de préférence 4 à 24 atomes de carbone ;

les mercaptides tels que les mercaptides dérivés du thioglycolate d'isooctyle ;

les chélates des composés β-dicarbonylés de formule (I).

**Claims**

1. Process for the prestabilisation of polymers based on vinyl chloride, characterised in that effective amounts of at least one organic or inorganic zinc compound and of at least one β-diketone or β-ketoaldehyde are added to the monomer or comonomers, before or during the polymerisation leading to the said polymers.

2. Process according to Claim 1, characterised in that :

A. the zinc compound is chosen from amongst :

— inorganic zinc compounds such as zinc hydroxide, zinc chloride, zinc bromide, zinc fluoride, zinc iodide, zinc carbonate, zinc nitrate, zinc phosphates, zinc silicates, zinc sulphate and zinc sulphite ; and

— organic zinc compounds such as :

the zinc salts of :

aliphatic monocarboxylic acids having 1 to 30 carbon atoms or aliphatic dicarboxylic acids having 2 to 30 carbon atoms, which are unsaturated or saturated and unsubstituted or substituted, for example, by one or more halogen atoms ;

monoalkyl esters (the alkyl group having 1 to 24 carbon atoms) or monoalkenyl esters (the alkenyl group having 3 to 24 carbon atoms) of the aliphatic dicarboxylic acids indicated above ; or

aromatic or alicyclic monocarboxylic acids which are unsubstituted or substituted, for example, by one or more alkyl radicals having 1 to 6 carbon atoms, or alkoxy radicals having 1 to 6 carbon atoms, by one or more halogen atoms or by one or 2 OH groups ;

the zinc phenates derived from substituted or unsubstituted phenolic compounds such as, for example, phenol or phenols of which the ring is substituted by one or more alkyl groups preferably having from 4 to 24 carbon atoms ;

zinc mercaptides such as, for example, the zinc derivative of isooctyl 2-mercaptoacetate ; or

zinc chelates of β-diketones ; and

B. the β-diketone or β-ketoaldehyde is chosen from amongst the compounds of the general formula (I) :

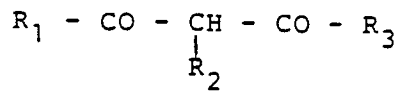

in which :

— $R_1$ and $R_3$, which are identical or different, represent :

a linear or branched alkyl group having 1 to 36 carbon atoms, which is optionally substituted by one or more halogen atoms,

a linear or branched alkenyl group having 3 to 36 carbon atoms, which is optionally substituted by one or more halogen atoms,

an aryl radical or an aryl radical carrying, on the aromatic ring, one or more substituents such as :

alkyl radicals having 1 to 6 carbon atoms, which are optionally substituted by one or more halogen atoms,

alkenyl radicals having 2 to 6 carbon atoms, which are optionally substituted by one or more halogen atoms,

the nitro group,

the group —CHO,

the group —COOH,

alkoxy groups having 1 to 6 carbon atoms,

the groups —$COOR_4$, $R_4$ being an alkyl radical having 1 to 12 carbon atoms or an alkenyl radical having 2 to 12 carbon atoms,

the group OH, or

halogen atoms,

an aralkyl radical in which the aliphatic part contains from 1 to 12 carbon atoms and in which the cyclic part can contain one or more of the substituents indicated above,

a cycloaliphatic radical containing from 5 to 12 carbon atoms, the cyclic part of which can contain one or more carbon-carbon double bonds and can carry one or more of the substituents indicated above, or

a sequence of several of the radicals indicated above,

it being possible for the various aliphatic radicals defined above to contain one or more oxygen atoms —O—, sulphur atoms —S—, carbonyl groups —CO— or carboxylate groups —COO— ;

— one of the radicals $R_1$ or $R_3$ can represent a hydrogen atom ;

— $R_2$ represents :

a hydrogen atom,

an alkyl or alkenyl radical having up to 36 carbon atoms, which can contain one or more linkages —O—, —S—, —CO— or —COO—,

a radical —CO—$R_3$, $R_3$ being an alkyl radical having from 1 to 36 carbon atoms or an aryl radical optionally carrying one or more of the substituents indicated above,

a radical 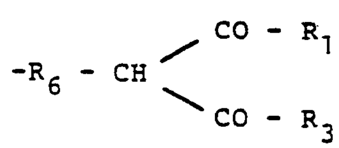

$R_6$ being an alkylene radical having 1 to 6 carbon atoms or a hydrogen atom, and

$R_1$ and $R_3$ having the meanings indicated above,

an N-substituted carbamoyl radical of the formula :

$$-OC-NH-R_7$$

in which $R_7$ is an aryl radical optionally carrying one or more of the substituents indicated above,

a radical of the formula :

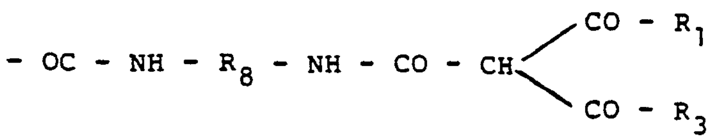

in which :

$R_1$ and $R_3$ have the meanings indicated above, and

$R_8$ represents :

— an arylene radical optionally carrying one or more of the substituents indicated above, or

— a diphenylenemethane radical of which one or both rings optionally carry one or more of the substituents indicated above,

a radical of the formula :

$$—COO—R_9,$$

in which $R_9$ is a substituted or unsubstituted alkyl radical having from 1 to 36 carbon atoms, or

a radical of the formula :

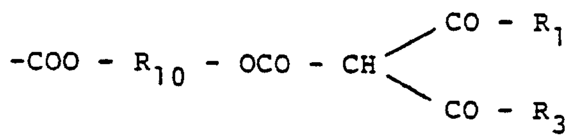

in which $R_1$ and $R_3$ have the meanings indicated above and $R_{10}$ represents a linear or branched alkylene radical which is unsubstituted or substituted by one or more halogen atoms and which has 1 to 20 carbon atoms ;

— the symbols $R_1$ and $R_3$ can together represent a divalent radical having 2 to 5 carbon atoms, which can contain an oxygen, sulphur or nitrogen atom ;

— the symbols $R_1$ and $R_2$ can together represent a divalent radical such as :

a linear or branched alkylene or alkenylene radical having from 3 to 36 carbon atoms,

an aralkylene radical having from 7 to 36 carbon atoms; or

a divalent arylene or cycloaliphatic radical having fewer than 14 carbon atoms, it being possible for the cycloaliphatic radicals to contain one or more carbon-carbon double bonds,

it being possible for these divalent radicals to be substituted by one or more halogen atoms and for the aromatic and cycloaliphatic rings to carry one or more of the substituents indicated above,

and it being possible for the aliphatic parts of the above divalent radicals to contain one or more oxygen atoms —O—, sulphur atoms —S— or groups —CO— or —COO— ; and

— the various radicals represented by $R_1$ and $R_3$ are such that the 2 carbon atoms directly bonded to the carbonyl groups in the formula (I) do not contain a double bond.

3. Process according to one of Claims 1 and 2, characterised in that :

— from 0.000 5 to 0.05 % by weight of zinc compound and

— from 0.001 to 1 % by weight of β-diketone or β-ketoaldehyde

are used, relative to the monomer or comonomers used in the polymerisation.

4. Process according to any one of Claims 1 to 3, characterised in that :

— from 0.001 to 0.01 % by weight of zinc compound and

— from 0.01 to 0.5 % by weight of β-diketone or β-ketoaldehyde

are used, relative to the monomer or comonomers used in the polymerisation.

5. Process according to any one of Claims 1 to 4, characterised in that it is applied to polymers based on vinyl chloride which are prepared in suspension or in emulsion.

6. Process according to any one of Claims 1 to 4, characterised in that an organic zinc derivative is used if the said process is applied to polymers based on vinyl chloride which are prepared in bulk.

7. Polymers based on vinyl chloride which are prestabilised by the process according to any one of Claims 1 to 6.

8. Process for the stabilisation of polymers based on vinyl chloride, characterised in that it comprises :

A) a prestabilisation according to one of Claims 1 to 6 ; and

B) an additional stabilisation, after the polymerisation, using stabilisers or stabilising systems chosen from amongst :

— combinations of β-diketones or β-ketoaldehydes with at least one organic zinc compound and at least one organic compound of a metal of group IIa of the periodic table of the elements ;

— combinations of a cadmium carboxylate with a barium carboxylate ;

— organotin mercaptides, in particular mixtures of diorganotin and monoorganotin mercaptides ;

— organotin maleates ;

— lead compounds ;
— aminocrotonic acid esters ;
— 2-phenylindole and its derivatives, in combination with at least one organic zinc compound and with at least one organic compound of a metal of group IIa of the periodic table of the elements ;
— 1,4-dihydro-2,6-dimethyl-3,5-dialkoxycarbonylpyridines, if appropriate in combination with at least one organic zinc compound and with at least one organic compound of a metal of group IIa of the periodic table of the elements ; and
— thioglycolic acid esters in combination with at least one organic zinc compound and with at least one organic compound of a metal of group IIa of the periodic table of the elements.

9. Process according to Claim 8, characterised in that the additional stabilisation, after the polymerisation, is carried out using combinations of :
— at least one β-diketone or β-ketoaldehyde of the general formula (I), such as defined in Claim 2 ;
— at least one organic zinc compound such as those indicated in Claim 2 ; and
— at least one organic compound of calcium, barium, magnesium or strontium, such as :
the salts of :
aliphatic monocarboxylic acids having 1 to 30 carbon atoms or aliphatic dicarboxylic acids having 2 to 30 carbon atoms, which are unsaturated or saturated and unsubstituted or substituted, for example, by one or more halogen atoms,
monoalkyl esters (the alkyl group having 1 to 24 carbon atoms) or monoalkenyl esters (the alkenyl group having 3 to 24 carbon atoms) of the aliphatic dicarboxylic acids indicated above, and
aromatic or alicyclic monocarboxylic acids which are unsubstituted or substituted, for example, by one or more alkyl radicals having 1 to 6 carbon atoms or alkoxy radicals having 1 to 6 carbon atoms, by one or more halogen atoms or by one or two groups —OH ;
the metal phenates derived from substituted or unsubstituted phenolic compounds such as, for example, phenol or phenols of which the ring is substituted by one or more alkyl groups preferably having 4 to 24 carbon atoms ;
the mercaptides such as the mercaptides derived from isooctyl thioglycolate ; and
the chelates of the β-dicarbonyl compounds of the formula (I).

**Patentansprüche**

1. Verfahren zum Vorstabilisieren von Polymeren auf der Basis von Vinylchlorid, gekennzeichnet durch die Zugabe wirksamer Mengen mindestens einer organischen oder anorganischen Zinkverbindung sowie mindestens eines β-Diketons oder eines β-Ketoaldehyds zu dem Monomeren oder den Comonomeren vor oder während der Polymerisation, die zu den genannten Polymeren führt.

2. Verfahren nach Anspruch 1, dadurch gekennzeichnet, daß :

A. die Zinkverbindung ausgewählt wird aus :

— den anorganischen Zinkverbindungen wie Zinkhydroxid, Zinkchlorid, Zinkbromid, Zinkfluorid, Zinkiodid, Zinkcarbonat, Zinknitrat, den Zinkphosphaten, den Zinksilicaten, Zinksulfat und Zinksulfit ;
— den organischen Zinkverbindungen wie :
Zinksalzen von :
aliphatischen Monocarbonsäuren mit 1 bis 30 Kohlenstoffatomen oder aliphatischen Dicarbonsäuren mit 2 bis 30 Kohlenstoffatomen, gesättigt oder nicht, substituiert oder nicht, beispielsweise durch ein oder mehrere Halogenatome ;
Alkylmonoestern mit 1 bis 24 Kohlenstoffatomen in der Alkylgruppe oder Alkenylmonoestern mit 3 bis 24 Kohlenstoffatomen in der Alkenylgruppe, der zuvor angegebenen aliphatischen Dicarbonsäuren ;
aromatischenoder alicyclischen Monocarbonsäuren, die gegebenenfalls substituiert sind, beispielsweise durch eine oder mehrere Alkylgruppen mit 1 bis 6 Kohlenstoffatomen oder Alkoxygruppen mit 1 bis 6 Kohlenstoffatomen oder durch ein oder mehrere Halogenatome oder eine oder zwei OH-Gruppen ;
Zinkphenolaten, abgeleitet von gegebenenfalls substituierten Phenolverbindungen wie Phenol oder Phenole, deren Ring durch eine oder mehrere Alkylgruppen mit vorzugsweise 4 bis 24 Kohlenstoffatomen substituiert ist ;
Zinkmercaptide wie beispielsweise 2-Zinkiosulfid-isooctylacetat ;
Zinkchelaten von β-Diketonen ;

B. das β-Diketon oder der β-Ketoaldehyd aus Verbindungen der allgemeinen Formel (I) ausgewählt wird :

$$R_1 - CO - \underset{\displaystyle R_2}{\overset{|}{CH}} - CO - R_3 \qquad (I)$$

in der:

— $R_1$ und $R_3$, die gleich oder verschieden sind, (jeweils) stehen für:

eine lineare oder verzweigte Alkylgruppe mit 1 bis 36 Kohlenstoffatomen, gegebenenfalls substituiert durch ein oder mehrere Halogenatome;

eine lineare oder verzweigte Alkenylgruppe mit 3 bis 36 Kohlenstoffatomen, gegebenenfalls substituiert durch ein oder mehrere Halogenatome;

eine Arylgruppe oder eine Arylgruppe mit einem oder mehreren Substituenten am aromatischen Ring wie:

Alkylgruppen mit 1 bis 6 Kohlenstoffatomen, gegebenenfalls substituiert durch eine oder mehrere Halogenatome;

Alkenylgruppen mit 2 bis 6 Kohlenstoffatomen, gegebenenfalls substituiert mit einem oder mehreren Halogenatomen,

Nitrogruppe,

—CHO—Gruppe,

—COOH—Gruppe,

Alkoxygruppen mit 1 bis 6 Kohlenstoffatomen,

—$COOR_4$—Gruppen, wobei $R_4$ eine Alkylgruppe mit 1 bis 12 Kohlenstoffatomen oder eine Alkenylgruppe mit 2 bis 12 Kohlenstoffatomen ist,

OH—Gruppe,

Halogenatome;

eine Aralkylgruppe mit 1 bis 12 Kohlenstoffatomen im aliphatischen Teil und gegebenenfalls einem oder mehreren der zuvor genannten Substituenten im Ringteil;

eine cycloaliphatische Gruppe mit 5 bis 12 Kohlenstoffatomen, deren Ring eine oder mehrere Kohlenstoff-Kohlenstoff-Doppelbindungen sowie einen oder mehrere der zuvor genannten Substituenten aufweisen kann;

eine Verknüpfung von mehreren der zuvor genannten Gruppen, wobei die verschiedenen, zuvor definierten aliphatischen Gruppen ein oder mehrere Sauerstoffatome —O—, oder Schwefelatome —S—, oder Carbonylgruppen —CO—, oder Carboxylatgruppen —COO— enthalten können;

— eine der Gruppen $R_1$ oder $R_3$ ein Wasserstoffatom sein kann;

— $R_2$ bedeutet:

ein Wasserstoffatom;

eine Alkyl- oder Alkenylgruppe mit bis zu 36 Kohlenstoffatomen, die eine oder mehrere Verknüpfungsstellen —O—, —S—, —CO— oder —COO— enthalten können;

eine Gruppe —CO—$R_3$, wobei $R_3$ eine Alkylgruppe mit 1 bis 36 Kohlenstoffatomen ist oder eine Arylgruppe, die gegebenenfalls einen oder mehrere der zuvor genannten Substituenten trägt;

eine Gruppe 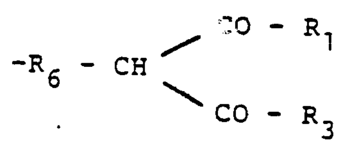

wobei

$R_6$ eine Alkylengruppe mit 1 bis 6 Kohlenstoffatomen oder ein Wasserstoffatom ist und

$R_1$ und $R_3$ die zuvor angegebenen Bedeutungen haben;

eine N-substituierte Carbamoylgruppe der Formel

$$—OC—NH—R_7,$$

in der $R_7$ eine Arylgruppe ist, die gegebenenfalls einen oder mehrere der zuvor genannten Substituenten trägt;

eine Gruppe der Formel:

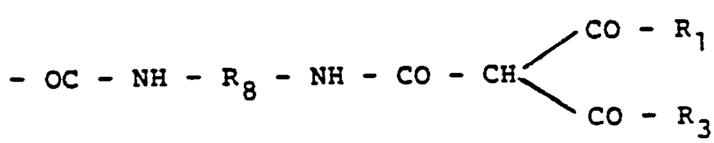

in der

$R_1$ und $R_3$ die zuvor angegebenen Bedeutungen haben,

$R_8$ bedeutet:

— eine Arylengruppe mit gegebenenfalls einem oder mehreren der zuvor genannten Substituenten,

— eine Diphenylenmethangruppe, bei der gegebenenfalls ein Ring oder beide Ringe einen oder mehrere der zuvor genannten Substituenten tragen;

eine Gruppe der Formel

$—COO—R_9$,

in der $R_9$ eine gegebenenfalls substituierte Alkylgruppe mit 1 bis 36 Kohlenstoffatomen ist ;

eine Gruppe der Formel

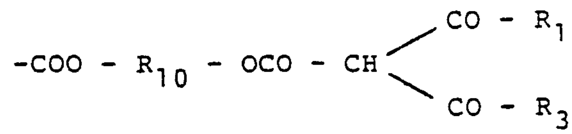

in der $R_1$ und $R_3$ die zuvor angegebenen Bedeutungen haben und $R_{10}$ eine lineare oder verzweigte Alkylengruppe bedeuten, die gegebenenfalls durch ein oder mehrere Halogenatome substituiert ist und 1 bis 20 Kohlenstoffatome aufweist ;

— die Gruppen $R_1$ und $R_3$ können zusammen eine zweiwertige Gruppe mit 2 bis 5 Kohlenstoffatomen bilden, die ein Sauerstoff-, Schwefel- oder Stickstoffatom enthalten kann ;

— die Gruppen $R_1$ und $R_2$ können zusammen eine zweiwertige Gruppe bilden, wie :

eine lineare oder verzweigte Alkylen- oder Alkenylengruppe mit 3 bis 36 Kohlenstoffatomen ;

eine Aralkylengruppe mit 7 bis 36 Kohlenstoffatomen ;

eine Arylengruppe oder cycloaliphatische zweiwertige Gruppe mit weniger als 14 Kohlenstoffatomen, wobei die cycloaliphatischen Gruppen eine oder mehrere Kohlenstoff-Kohlenstoff-Doppelbindungen enthalten können und wobei

diese zweiwertigen Gruppen mit einem oder mehreren Halogenatomen substituiert sein und die aromatischen und cycloaliphatischen Ringe einen oder mehrere der zuvor genannten Substituenten tragen können ;

die aliphatischen Teile der vorgenannten zweiwertigen Gruppen können einen oder mehrere Sauerstoffatome —O— oder Schwefelatome —S— oder Gruppen —CO— oder —COO— enthalten ;

— die verschiedenen durch $R_1$ und $R_3$ wiedergegebenen zweiwertigen Gruppen sind so beschaffen, daß von keinem der beiden an die Carbonylgruppen der Formel (I) gebundenen Kohlenstoffatome eine Doppelbindung ausgeht.

3. Verfahren nach einem der Ansprüche 1 und 2, dadurch gekennzeichnet, daß man

— 0,000 5 bis Gew.-% Zinkverbindung und

— 0,001 bis 1 Gew.-% β-Diketon oder β-Ketoaldehyd verwendet,

bezogen auf das bzw. die bei der Polymerisation eingesetzte(n) Monomere oder Comonomeren.

4. Verfahren nach einem der Ansprüche 1 bis 3, dadurch gekennzeichnet, daß man

— 0,001 bis 0,01 Gew.-% Zinkverbindung und

— 0,01 bis 0,5 Gew.-% β-Diketon oder β-Ketoaldehyd verwendet,

bezogen auf das bzw. die bei der Polymerisation eingesetzte(n) Monomere oder Comonomeren.

5. Verfahren nach einem der Ansprüche 1 bis 4, dadurch gekennzeichnet, daß es auf Polymere auf der Basis von Vinylchlorid angewandt wird, die in Suspension oder in Emulsion hergestellt werden.

6. Verfahren nach einem der Ansprüche 1 bis 4, dadurch gekennzeichnet, daß man eine organische Zinkverbindung verwendet, wenn das Verfahren auf Polymere auf der Basis von Vinylchlorid angewandt wird, die durch Massenpolymerisation erhalten werden.

7. Mit Hilfe des Verfahrens nach einem der Ansprüche 1 bis 6 vorstabilisierte Polymere auf der Basis von Vinylchlorid.

8. Verfahren zur Stabilisierung von Polymeren auf der Basis von Vinylchlorid, dadurch gekennzeichnet, daß es umfaßt :

A) eine Vorstabilisierung gemäß einem der Ansprüche 1 bis 6 ;

B) eine zusätzliche Stabilisierung nach der Polymerisation mit Hilfe von Stabilisatoren oder Stabilisatorsystemen ausgewählt aus :

— den Kombinationen von β-Diketonen oder β-Ketoaldehyden mit mindestens einer organischen Zinkverbindung und mindestens einer organischen Verbindung eines Metalls der Gruppe IIa des Periodensystems ;

— den Kombinationen aus Cadmiumcarboxylat und Bariumcarboxylat ;

— den Organozinnmercaptiden, vor allem den Gemischen von Diorganozinnmercaptiden und Monoorganozinnmercaptiden ;

— den Organozinnmaleaten ;

— den Bleiverbindungen ;

— den Aminocrotonsäureestern ;

— 2-Phenylindol und seinen Derivaten, kombiniert mit mindestens einer organischen Zinkverbindung und mindestens einer organischen Verbindung eines Metalls der Gruppe IIa des Periodensystems ;

— 1,4-Dihydro-2,6-dimethyl-3,5-dialkoxycarbonylpyridinen, gegebenenfalls kombiniert mit mindestens einer organischen Zinkverbindung und mindestens einer organischen Verbindung eines Metalls der Gruppe IIa des Periodensystems ;

— Estern der Thioglykolsäure, kombiniert mit mindestens einer organischen Zinkverbindung und mindestens einer organischen Verbindung eines Metalls der Gruppe IIa des Periodensystems.

9. Verfahren nach Anspruch 8, dadurch gekennzeichnet, daß die zusätzliche Stabilisierung nach der Polymerisation mit Hilfe folgender Kombinationen ausgeführt wird :

— mindestens ein β-Diketon oder β-Ketoaldehyd der allgemeinen Formel (I) wie im Anspruch 2 definiert ;

— mindestens eine der in Anspruch 2 angegebenen organischen Zinkverbindungen ;

— und mindestens eine organische Verbindung von Calcium, Barium, Magnesium oder Strontium wie :

die Salze von :

aliphatischen Monocarbonsäuren mit 1 bis 30 Kohlenstoffatomen oder aliphatischen Dicarbonsäuren mit 2 bis 30 Kohlenstoffatomen, gesättigt oder nicht, substituiert oder nicht, beispielsweise durch ein oder mehrere Halogenatome ;

Alkylmonoestern, wobei die Alkylgruppe 1 bis 24 Kohlenstoffatome enthält, oder Akenylmonoestern, wobei die Alkenylgruppe 3 bis 24 Kohlenstoffatome enthält, der zuvor angegebenen aliphatischen Dicarbonsäuren ;

aromatischen oder alicyclischen Monocarbonsäuren, die gegebenenfalls substituiert sind, beispielsweise durch eine oder mehrere Alkylgruppen mit 1 bis 6 Kohlenstoffatomen oder Alkoxygruppen mit 1 bis 6 Kohlenstoffatomen, mit einem oder mehreren Halogenatomen oder mit einer oder zwei OH-Gruppen ;

Metallphenolate, abgeleitet von gegebenenfalls substituierten Phenolverbindungen wie Phenol oder Phenole, deren Ring mit einer oder mehreren Alkylgruppen substituiert ist, die vorzugsweise 4 bis 24 Kohlenstoffatome enthalten ;

Mercaptide wie die von Isooctyl-thioglykolat abgeleiteten Mercaptide ;

Chelate der β-Dicarbonylverbindungen der Formel (I).